# NOUVEAU FASCICULE DE BREVET EUROPEEN

(11) **EP 0 481 879 B2**
(45) Date de publication et mention de la décision concernant l'opposition: **25.07.2001**
(45) Mention de la délivrance du brevet: 21.08.1996
(21) Numéro de dépôt: 91402755.2
(22) Date de dépôt: 15.10.1991
(51) Int. Cl.: H04M 1/68, H04M 11/00, G07F 7/08

(54) **Dispositif émetteur de sequences de signaux constituant un moyen de paiement**
Vorrichtung zur Sendung von Signalreihenfolgen, die als Zahlungsmittel vorgesehen ist
Device for emitting signal sequences constituting a payment means

(30) Priorité: 17.10.1990 FR 9012804
(43) Date de publication de la demande: 22.04.1992
(73) Titulaire: SOCIETE D'EXPLOITATION DU JETON SECURISE- SEJS, 92100 Boulogne (FR)
(72) Inventeur: Bernard, Alain, 75015-Paris (FR)
(74) Mandataire: Signore, Robert

(56) Documents cités:
- EP-A- 0 244 332
- EP-A- 0 385 070
- US-A- 4 601 011
- US-A- 4 928 098

## Description

### Domaine technique

La présente invention a pour objet un dispositif émetteur de signaux acoustiques destiné à être utilisé comme moyen de paiement électronique de services par l'intermédiaire du téléphone.

### Etat de la technique antérieure

On connaît ces dispositifs émetteurs de signaux acoustiques du genre calculette aptes à stocker et à émettre des numéros de téléphone. Ces dispositifs offrent la possibilité à l'utilisateur d'entrer des séquences de nombres sur un clavier et de les restituer par couplage acoustique sur le réseau téléphonique. L'utilisateur peut ainsi réémettre de façon répétitive une séquence de signaux acoustiques tels qu'un code secret, lui permettant de consulter, sur un serveur vocal, son compte en banque ou sa boîte à lettres. Le code nécessaire à la transaction étant toujours le même, une personne mal intentionnée peut, en se branchant sur la ligne, enregistrer à l'aide d'un magnétophone les tonalités émises et les réémettre ensuite pour son usage personnel.

Pour remédier à cet inconvénient, d'autres dispositifs ont été imaginés, notamment pour l'accès à un ordinateur par la voie téléphonique, dans lesquels la séquence émise change à chaque émission. Ainsi, le document US-A-4 601 011, décrivant un système selon le préambule de la revendication 1, prévoit de changer la séquence émise grâce à un compteur dont le contenu est incrémenté à chaque utilisation. Le contenu de ce compteur détermine en partie le message numérique envoyé. Le dispositif comporte un clavier d'introduction d'un code personnel, ce qui le rend encombrant et augmente son prix. Mais il est indispensable dans l'application décrite, en particulier pour permettre le déchiffrement de la séquence émise.

Bien que n'étant pas à prendre en considération pour l'appréciation de l'activité inventive de l'invention qui va être décrite, puisque non encore publiée, la demande de brevet européen EP-A-0 451 056 au nom du Demandeur peut être évoquée ici, pour une meilleure compréhension de la présente invention, car cette demande décrit un dispositif électronique qui émet lui aussi des séquences changeant dans le temps. Le dispositif décrit dans cette demande antérieure comprend un émetteur acoustique relié à un générateur de commande apte à engendrer des tonalités tombant dans la bande téléphonique, une mémoire contenant un premier code d'identification et un second code ou clé de service liée au système téléphonique dans lequel le dispositif est utilisé, une horloge donnant la date et déterminant l'instant de péremption du dispositif. Un circuit électronique et logique est relié à la mémoire et à l'horloge et commande le générateur, ce circuit étant apte à former un message constitué par une suite de nombres qui dépend du premier code, de la clé, et de la date indiquée par l'horloge. Chaque nombre de cette suite commande le générateur pour l'émission d'une tonalité particulière par l'émetteur acoustique. Le dispositif comprend encore une pile apte à alimenter en permanence l'horloge, la mémoire et le circuit électronique, et un interrupteur commandé manuellement apte à mettre en service le générateur pour produire l'émission de la séquence de tonalités.

Dans ce dispositif, l'horloge a pour but, en particulier, de changer régulièrement la séquence émise, de façon qu'une même séquence ne puisse être utilisée trop longtemps. Ce système présente dans certaines applications deux inconvénients : d'une part, celui de consommer en permanence de l'énergie pour alimenter l'horloge et, d'autre part, celui d'émettre la même séquence pendant la période de temps prise comme unité ou, si l'on supprime cette possibilité, d'imposer la neutralisation des émissions pendant cette période.

On connaît également des dispositifs de type porte-monnaie ou porte-jetons électroniques reposant sur la carte à mémoire. Mais ces dispositifs nécessitent l'emploi d'un lecteur de carte spécialisé et ils sont donc d'un emploi peu aisé.

On connaît encore par le document EP-A-0 244 332 des dispositifs fonctionnant dans l'infra-rouge et destinés à la commande des serrures des voitures. Ces dispositifs comportent encore un clavier.

En dehors des dispositifs dont l'émetteur comporte un clavier permettant d'entrer des données de personnalisation, on connaît encore deux systèmes à commande unique qui sont décrits dans les documents EP-A-0 385 070 et US-A-4 928 098. Le premier consiste à émettre de façon cyclique une suite de codes stockés dans une table, mais la répétition de ces codes, au bout d'un certain temps, réduit considérablement la sécurité du système. Le deuxième est plus complexe puisqu'il consiste à transmettre une partie fixe et un mot chiffré, le récepteur vérifiant la concordance entre la partie fixe et le mot chiffré. Ce dispositif, qui n'a aucune vocation monétaire ou téléphonique, peut être réinitialisé par l'utilisateur par déconnexion de la pile. Dans ce cas, il réémet les mêmes séquences de signaux, sauf dans la variante décrite dans laquelle l'utilisateur dispose d'interrupteurs lui permettant de reprogrammer partiellement le mot fixe.

### Exposé de l'invention

La présente invention a justement pour but de remédier à ces divers inconvénients des dispositifs antérieurs. A cette fin, elle propose un dispositif émetteur d'une très grande simplicité de structure et d'emploi et qui est apte à engendrer des séquences différentes d'une émission à l'autre.

De façon précise, la présente invention a pour objet un dispositif émetteur de séquences de signaux, défini par l'ensemble des caractéristiques de la revendication 1.

Les séquences de signaux électriques (ou tout au moins leur partie variable) sont calculées à chaque émission par un algorithme qui est incrémenté à chaque nouvelle commande. L'algorithme met en oeuvre des procédés à clés diversifiées, chaque dispositif étant alors pourvu d'une clé diversifiée.

### Brève description des dessins

- la figure 1 montre le schéma synoptique du dispositif ;
- la figure 2 représente une vue schématique en coupe du dispositif ;
- la figure 3 montre l'allure générale du dispositif dans le cas d'une réalisation sous forme de jeton.

### Exposé détaillé d'un mode de réalisation

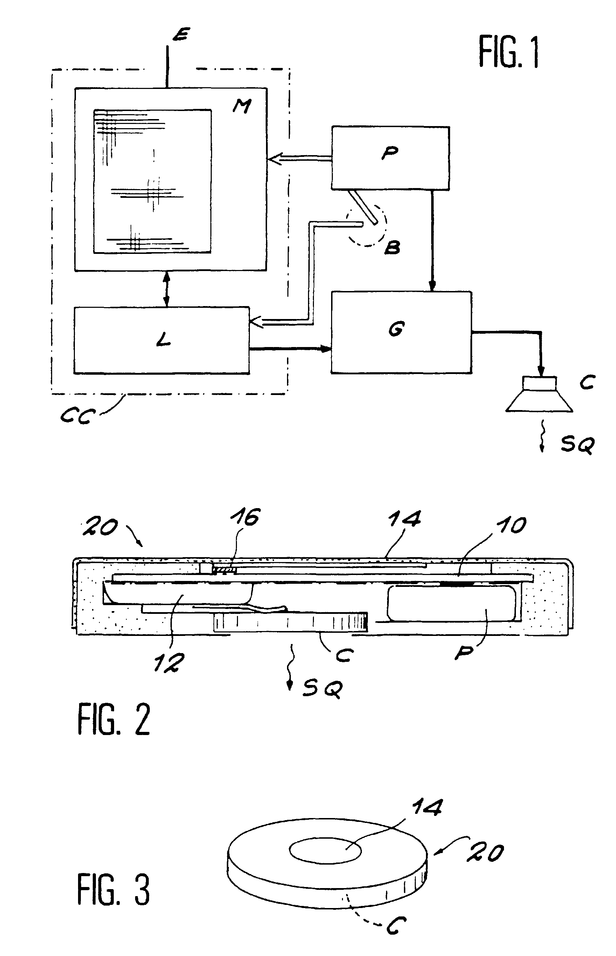

Le dispositif représenté sur la figure 1 comprend : un transducteur ou coupleur C, qui a pour but d'émettre les séquences de signaux acoustiques SQ. Un coupleur acoustique peut être constitué d'une petite coupelle en métal au centre de laquelle est collé un transducteur piézoélectrique. On peut aussi utiliser un petit haut-parleur.

Le dispositif comprend encore un générateur G apte à engendrer des séquences de signaux électriques aptes à commander le transducteur C. A titre d'exemple, on peut utiliser un générateur de signaux électriques dans la bande téléphonique tel que le circuit PCD 3311 qui produit des signaux permettant d'émettre des tonalités conformes au code Q23 du C.C.I.T.T.

Le circuit électronique CC de commande du générateur G comprend une microstructure logique L capable de fournir au générateur G une séquence de données élaborée à partir d'informations stockées dans une mémoire M. Cette microstructure L peut être constituée de tout circuit logique tel qu'un microprocesseur. Eventuellement, il est possible d'utiliser des microcontrôleurs comme le TCM 8305 qui possède non seulement la capacité d'émettre des signaux téléphoniques, mais aussi celle d'aller chercher des séquences de signaux dans une mémoire extérieure. La microstructure L et le générateur G et éventuellement la mémoire M sont alors confondus sur une même puce, en silicium par exemple.

Le dispositif comprend encore une ou plusieurs piles aptes à alimenter les moyens M, G, L et C.

L'utilisateur dispose d'un moyen de commande B agissant par pression ou par contact et qui est apte à déclencher l'élaboration d'une des séquences à partir des données stockées dans la mémoire M.

La mémoire M est par ailleurs pourvue d'un moyen d'entrée E des informations, préalablement à la mise en service du dispositif.

Sous la commande du moyen B, le dispositif émet une séquence de signaux mais il n'émet jamais, d'une fois sur l'autre, la même séquence de signaux.

Une réalisation destinée à être utilisée sur le réseau téléphonique peut être constituée, selon le schéma de la figure 2, d'un circuit imprimé 10 portant sur sa face inférieure la pile P et les circuits intégrés 12 nécessaires au fonctionnement. Sur sa face supérieure le circuit porte un bouton poussoir 14 pour la commande ainsi que des contacts 16 permettant de fournir les données de mise en oeuvre aux circuits logiques.

Une autre caractéristique de l'invention est que des dispositifs différents émettent des séquences différentes. A titre d'exemple tout à fait trivial, un premier dispositif pourra émettre les nombres de 1 à 1000, un deuxième dispositif pourra émettre les nombres de 1001 à 2000, un troisième de 2001 à 3000 et ainsi de suite. A la première commande, le premier dispositif émettra le chiffre 1, à la deuxième le chiffre 2, etc..: On aura ainsi créé une famille de dispositifs, qui, à condition de ne pas les utiliser plus de 1000 fois chacun, pourront être facilement différenciés les uns des autres et n'émettront jamais la même fréquence.

Il est évident qu'un choix judicieux des séquences émises par chaque dispositif permet d'éviter qu'un individu puisse deviner les séquences qui restent à émettre. Il est par exemple possible de brasser aléatoirement, lors de la fabrication ou de la mise en service des dispositifs, les séquences devant être émises en notant la liste et éventuellement l'ordre des séquences inscrites dans chaque dispositif.

Si le dispositif de l'invention est utilisé dans l'application décrite dans la demande de brevet européen EP-A-0 451 056 déjà citée, les séquences SQ émises par le dispositif selon l'invention présentent les caractéristiques permettant d'associer à chaque dispositif un numéro de compte. On peut alors associer au dispositif, soit une valeur faciale monétaire, soit un nombre d'unités de compte et le faire évoluer au fil des transactions comme décrit dans la demande précitée. On peut également associer au dispositif une date de péremption qui peut être soit stockée dans l'ordinateur de gestion des comptes avec la liste des séquences de chaque dispositif, soit transmise par le dispositif avec chaque séquence.

Une caractéristique de l'invention consiste en effet à réaliser des dispositifs qui transmettent à chaque commande des séquences différentes, mais dont une partie de la séquence émise est fixe.

Selon l'invention une séquence est calculée, à partir d'une fonction du nombre de fois où l'on a appuyé sur la commande. Cette correspondance entre séquence et nombre doit être biunivoque et faire varier le maximum de signaux de la séquence. Un algo- 10 rithme de chiffrement tel que le DES ("Data Encryption Standard") répond à ces conditions.

La clé utilisée pour faire fonctionner le DES est différente dans chaque dispositif. On utilise alors la partie fixe du message émis pour retrouver dans une table située dans l'ordinateur central recevant le message, la référence de cette clé. On dit alors que l'on utilise un chiffrement à clé diversifiée.

Lorsque le dispositif est utilisé dans un système de paiement, il est commode d'indiquer sur celui-ci sa valeur, avant toute utilisation, en unités monétaires ou de service. Bien que cette valeur évolue au fur et à mesure des utilisations, cette solution est admise pour les télé-cartes.

Dans la mesure où le système comporte une pile et n'est pas rechargeable puisque ses données s'effacent lorsque l'on enlève la pile, on peut inscrire dessus une date de péremption.

## Revendications

1. Dispositif émetteur de séquences de signaux constituant un moyen de paiement électronique, comprenant :
- un transducteur (C) apte à émettre des signaux (SQ) sous la commande de signaux électriques,
- un générateur de commande (G) apte à engendrer des séquences de signaux électriques appliqués au transducteur (C),
- un circuit électronique de commande (CC) du générateur (G), comprenant notamment une mémoire (M) pourvue d'une liaison électrique pour l'introduction de données servant à la détermination des séquences de signaux préalablement à la livraison du dispositif à l'utilisateur et une unité logique (L) apte à former ces séquences,
- un moyen d'alimentation (P) du circuit électronique de commande (CC) et du générateur (G),
- un moyen de commande (B) accessible par l'utilisateur du dispositif,
- le circuit électronique de commande (CC) du générateur (G) étant apte à engendrer des séquences de signaux électriques différentes à chaque action sur le moyen de commande, ces séquences étant différentes pour différents dispositifs et comprenant une partie fixe et une partie variable, ledit dispositif émettant ainsi des séquences de signaux acoustiques (SQ) différentes les unes des autres à chaque action sur le moyen de commande (B) et les séquences émises par un dispositif étant différentes des séquences émises par tout autre dispositif analogue,
- le transducteur (C) émettant des signaux acoustiques (SQ) ayant une fréquence compatible avec la bande téléphonique et dont la puissance est adaptée à leur transmission sur le réseau téléphonique par l'intermédiaire du microphone d'un combiné téléphonique,
ce dispositif étant caractérisé par le fait que :
- le moyen de commande (B, 14) est un bouton-poussoir (14) apte à déclencher à lui seul le fonctionnement du circuit électronique de commande (CC) du générateur (G) et l'émission par le transducteur (C) d'une séquence de signaux acoustiques (SQ),
- chaque dispositif est pourvu d'une clé de chiffrement diversifiée, la partie variable des séquences de signaux électriques étant calculée par le circuit de commande (CC) par un algorithme de chiffrement utilisant ladite clé diversifiée, ledit algorithme étant incrémenté à chaque nouvelle commande,
- le dispositif est contenu dans un boîtier de forme aplatie dont une face est utilisée pour le transducteur (C) et l'autre pour ledit bouton-poussoir (14).

## Claims

1. Device for transmitting sequences of signals constituting an electronic payment means, comprising:
- a transducer (C) able to transmit signals (SQ) under the control of electric signals,
- a control generator (G) able to generate sequences of electric signals applied to the transducer (C),
- an electronic control circuit (CC) of the generator (G), more particularly comprising a memory (M) having an electric link for the introduction of data used for the determination of signal sequences prior to the delivery of the device to the user and a logic unit (L) able to form these sequences,
- a power supply means (P) for the electronic control circuit (CC) and the generator (G),
- a control means (B) accessible by the user of the device,
- the electronic control circuit (CC) of the generator (G) able to produce different electric signal sequences for each action on the control means, said sequences being different for different devices and comprising a fixed part and a variable part, so that the device emits acoustic signal sequences (SQ) differing from one another for each action on the control means (B) and the sequences emitted by one device being different from the sequences emitted by any other identical device,
- the transducer (C) emitting acoustic signals (SQ) having a frequency compatible with the telephone band and whose power is adapted to their transmission on the telephone system by the microphone of a telephone handset,
said device being characterized in that:
- the control means (B, 14) is a pushbutton (14) able to trigger alone the operation of the electronic control circuit (CC) of the generator (G) and the emission by the transducer (C) of an acoustic signal sequence (SQ),
- each device being provided with a diversified encryption key, the variable part of the electric signal sequences being calculated by the control circuit (CC) by an encryption algorithm using said diversified key, said algorithm being incremented for each new control, the device being contained in a flat-shaped box, whose one face is used for the transducer (C) and whose other face is used for the pushbutton (14).

## Patentansprüche

1. Vorrichtung zum Senden von Signalreihenfolgen, die ein elektronisches Zahlungsmittel bilden, umfassend:
- einen Transducer (C) zum Senden der Signale (SQ) unter der Steuerung von elektrischen Signalen,
- einen Steuergenerator (G) zum Erzeugen der in den Transducer (C) eingespeisten Signalreihenfolgen,
- einen elektronischen Steuerschaltkreis (CC) des Generators (G), umfassend vor allem einen Speicher (M), versehen mit einer elektrischen Verbindung zur Einspeisung von Daten, die der Festlegung der Signalreihenfolgen vor der Lieferung durch die Vorrichtung an den Benutzer dienen, und eine Logikeinheit (L) zum Bilden dieser Reihenfolgen,
- eine Versorgungseinrichtung (P) des elektronischen Steuerschaltkreises (CC) und des Generators (G),
- eine Betätigungseinrichtung (B), dem Benutzer der Vorrichtung zugänglich,
- wobei der elektronische Steuerschaltkreis (CC) des Generator (G) fähig ist, bei jedem Einwirken auf die Betätigungseinrichtung Reihenfolgen unterschiedlicher elektrischer Signale zu erzeugen, diese Reihenfolgen unterschiedlich sind für verschiedene Vorrichtungen und einen festen Teil und einen variablen Teil umfassen, wobei besagte Vorrichtung also bei jedem Einwirken auf die Betätigungseinrichtung (B) Reihenfolgen sich voneinander unterscheidender akustischer Signale (SQ) sendet und die durch eine Vorrichtung gesendeten Reihenfolgen sich unterscheiden von Reihenfolgen, die von jeder anderen analogen Vorrichtung gesendet werden,
- wobei der Transducer (C) akustische Signale (SQ) mit einer Frequenz sendet, die kompatibel ist mit dem Telephonband und deren Leistung angepaßt ist an ihre Übertragung auf dem Telephonnetz mit Hilfe des Mikrophons eines Telephons,
wobei diese Vorrichtung **dadurch gekennzeichnet** ist:
- daß die Betätigungseinrichtung (B, 14) ein Druck- bzw. Tastknopf (14) ist, der allein fähig ist, den Betrieb des elektronischen Steuerschaltkreises (CC) des Generators (G) und das Senden einer Reihenfolge von akustischen Signalen (SQ) durch den Transducer (C) auszulösen,
- daß jede Vorrichtung mit einem diversifizierten Chiffrierschlüssel versehen ist, der variable Teil der elektrischen Signalreihenfolgen durch den Steuerschaltkreis (CC) mittels eines Chiffrieralgorithmus berechnet wird, der den genannten diversifizierten Schlüssel benutzt, und der genannte Algorithmus bei jeder neuen Betätigung inkrementiert wird,
- daß die Vorrichtung enthalten ist in einem Gehäuse von flacher Form, dessen eine Seite für den Transducer (C) verwendet wird und die andere für den genannten Druck- bzw. Tastknopf.
